# EUROPEAN PATENT APPLICATION

(11) **EP 0 621 078 A1**
(43) Date of publication of application: **26.10.1994**
(21) Application number: 94302687.2
(22) Date of filing: 15.04.1994
(51) Int. Cl.: B05B 7/14, B65G 53/14

(54) **Powder pump**

(30) Priority: 23.04.1993 JP 26953/93
(71) Applicant: NORDSON CORPORATION, Westlake Ohio 44145-1148 (US)
(72) Inventor: Masuda, Kenichi, Tokyo (JP); Kasahara, Shigeki, Tokyo (JP)
(74) Representative: Allen, Oliver John Richard

(57) **Abstract**

A powder spray system (10) includes a powder pump with a body (16) having a passage (26) which receives pressurized air, mixes powder particles therein and conveys the mixture to a powder gun for spraying from the gun. The mixing of powder particles occurs via generation of a negative pressure region (30) within the passage. This negative pressure region (30) is created by a venturi (28), which is removably received in the body (16), and which has a bellmouth shape at both ends (50,52). By providing a bellmouth shape at each end (50,52) of the plastic venturi (28), the venturi (28) may be used during an initial period of powder coating, then removed, reversed and relocated in the body for a second period of coating. This minimizes the adverse affects of consumption or wearing away of the venturi (28) at the upstream end, a susceptibility of plastic venturis, and thereby doubles the useful life of the venturi.

## Description

This invention relates to a powder pump for supplying fluidized powder particles to a powder gun of a powder coating system.

In a typical powder coating system, a powder pump supplies fluidized particles to a powder gun, and the gun sprays the powder toward an article to be coated. To do this, the powder pump includes an air pressure source which ejects air at high pressure along a first tube to an inlet of a body with a passage formed therethrough. The passage has an outlet which in turn connects to a second tube which connects to the gun.

The passage of the body includes a removable venturi. The passage of the body communicates with an opening at the upstream end of the venturi, and the opening communicates through an inlet tube with a powder supply, such as a fluidized bed. As the high pressure air moves through the venturi, a negative pressure is created in the opening. This draws the powder up the inlet tube into the venturi and causes it to flow through the venturi with the high pressure air, through the second tube and to the powder gun. It is preferable to use a venturi with a gradually tapered edge, referred to as a bellmouth shape. This shape promotes smooth and efficient flow.

Venturis are usually made of metal, however a metal venturi is not suitable for powder coating because, the venturi gets heated from the friction of the powder passing therethrough, the heat melts the powder, and it sticks to the inside surface of the venturi. This narrows the diameter of the venturi.

To eliminate this problem, plastic materials with a lower coefficient of friction are used. Various tests have shown a fluoride resin to produce the best results. However, when coating requires a powder with white cosmetics whose main ingredient is titanium oxide, the titanium oxide accelerates consumption of the fluoride resin. At typical pressure and flow rates, 350 kg of powder passes through the venturi every 30-40 hours, and the venturi is rapidly consumed to the extent that it cannot be used again.

A venturi for use in a powder pump in accordance with the invention, the venturi being releasably mounted within the body of the powder pump, is characterised in that the venturi is formed with a venturi passage terminating at each end in a bellmouth having gradually tapered edges.

Such a venturi, having a bellmouth shape at each end, is reversible. After a certain number of hours of use with a first end serving as the upstream end, the venturi can be reversed so that a second end thereof serves as the upstream end. While consumption still occurs at the same rate, reversing the venturi causes it to last twice as long.

Surprisingly, although initially it was suspected that the bellmouth shape at the downstream end of the venturi would cause problems due to turbulence, in practice it was found that no such problems occurred.

Preferably, the venturi is made of a plastics material such as fluoride resin. Because of the high durability and low coefficient friction of fluoride resin, a venturi made of this material represents an improvement over metal venturis. Moreover, by providing a bellmouth shape at both ends of the fluoride resin venturi, the useful life of a venturi with high durability and a low coefficient of friction is effectively doubled.

Because the life of a venturi in accordance with the invention is doubled, the cost of replacing venturis is halved, resulting in lower cost of components for powder pumps in powder coating operations.

The invention will now be described by way of example and with reference to the accompanying drawings, in which:
Fig. 1 is a longitudinal cross sectional schematic view of a powder pump for a powder coating system including a venturi in accordance with this invention;
Fig. 2 is a longitudinal cross sectional view of the body of the powder pump of Fig 1, and
Fig. 3 is an enlarged longitudinal cross sectional view of the venturi of Fig 1.

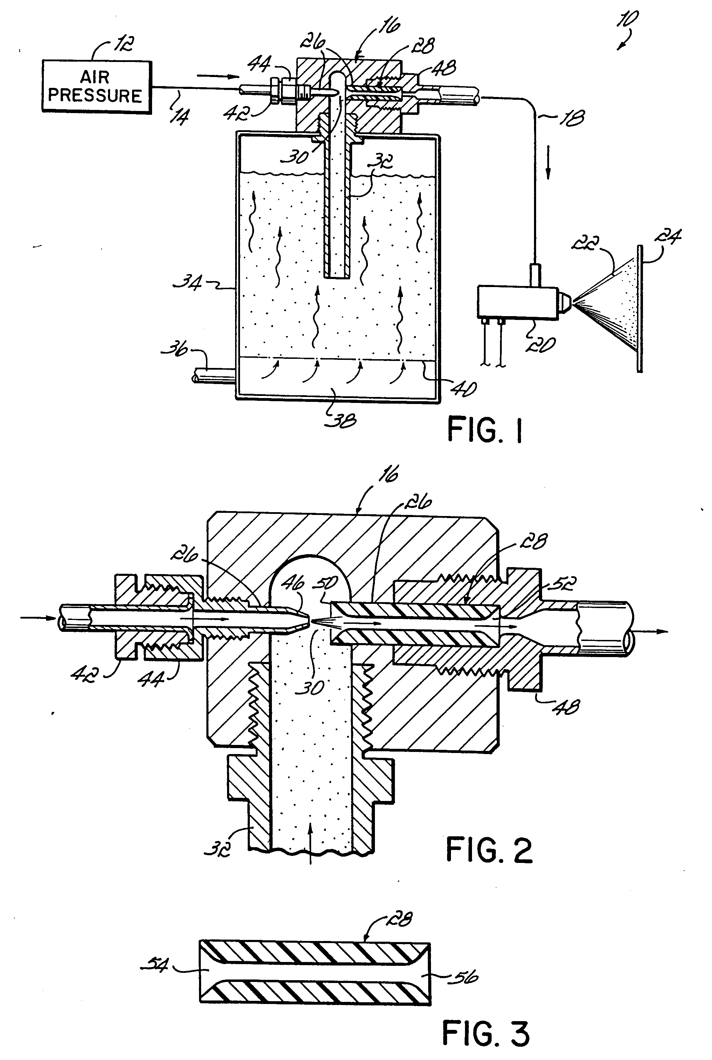

Fig. 1 shows a powder coating system 10 incorporating a powder pump with a venturi in accordance with the invention. The system 10 includes an air pressure source 12 which supplies high pressure air along a first tube 14, through a body 16, along a second tube 18, and to a powder gun 20. The gun 20 sprays the powder to produce a pattern 22 for coating an object 24. The body 16 includes a passage 26 in fluid communication with the first tube 14 and the second tube 18. A venturi 28 resides snugly within the passage 26, but is removable therefrom. Preferably the venturi 28 is made of a fluoride resin and includes a gradually tapered bellmouth shape at each end.

The passage 26 of the body 16 has an opening 30 upstream of the venturi 28, and the opening 30 is in fluid communication with an inlet tube 32 from a powder supply hopper 34. Preferably the hopper 34 connects via a tube 36 to a pressurized air source (not shown), which supplies pressurized air to a plenum 38 located below a fluidizing plate 40 in the hopper 34, thereby to fluidize the particles. A bottom end of the inlet tube 32 extends downward into the hopper 34, while an upper end thereof threadably connects to the body 16, as shown most clearly in Fig. 2.

Fig. 2 also shows a first connector 42 which threads to a second connector 44, which in turn threads into body 16, thereby to place first tube 14 in fluid communication with passage 26. The second connector 44 preferably terminates in a nozzle 46 which is aimed at the venturi 28. The venturi 28 is removably received within a third connector 48 which threadably connects to body 16, thereby to place the second tube 18 in fluid communication with the passage 26. As shown in Fig. 2, an upstream end 50 of the venturi 28 extends slightly into the opening 30, while a downstream end thereof 52 resides within the third connector 48.

Fig. 3 shows that a first end 54 and a second end 56 of the venturi 28 each have the above-described bellmouth shape, so that either the first end 54 or the second end 56 can be initially received in third connector 48 for a first period of use in powder coating, followed by reversing the venturi 28 to locate the other end within the third connector 48 during a second period of use. The venturi 28 is symmetrical and is reversed simply by unthreading the third connector 48 from the body 16, removing the venturi 28 therefrom, repositioning the venturi 28 therein with the opposite end in the third connector 48, and then rethreading the third connector 48 to the body 16.

During powder coating, the high pressure air supplied by source 12 traverses the first tube 14, the passage 26, the second tube 18 and eventually to the gun 20, where it is sprayed toward an object 24. While traversing the passage 26, the venturi 28 creates a low pressure region at opening 30 which draws in powder from the hopper 34 via inlet tube 32. When one end of the venturi 28, i.e., a first end 54, has been consumed (i.e. worn away), the coating process is temporarily halted, the third connector 48 is disconnected, the venturi 28 is reversed, the third connector 48 is reconnected and then powder coating resumes. Because the venturi 28 is reversible its useful life is doubled, thereby reducing the cost of replacement parts for powder pumps in powder coating operations.

## Claims

1. A venturi for use in a powder pump, the venturi being releasably mounted within the body of the powder pump, characterised in that the venturi is formed with a venturi passage terminating at each end in a bellmouth having gradually tapered edges.

2. A venturi according to Claim 1 wherein at least the surface of the venturi passage is formed of a plastics material.

3. A venturi according to Claim 2 wherein the plastics material is fluoride resin.

4. A venturi according to Claim 1, 2 or 3 wherein at least the outer surface thereof is substantially symmetrical about an axis through the centre of the venturi and perpendicular to the axis of the venturi passage.

5. A powder pump comprising a venturi according to any preceding Claim.

6. A powder pump according to Claim 5 comprising a pump body having passage therethrough, means for supplying pressurised air to the inlet of the passage and means for supplying powder particles to the passage, the venturi being located in the passage downstream from the point at which the powder particles are supplied.

7. A method of powder pumping comprising conveying a stream of pressurised air through a passage formed in a pump body and into a venturi which is releasably mounted within the pump body and which is formed with a venturi passage terminating at each end in a bellmouth having gradually tapered edges, the stream of pressurised air through the venturi passage causing a negative pressure upstream thereof so as to draw powder particles into the venturi to be conveyed therethrough, interrupting the stream of pressurised air, removing, reversing and replacing the venturi in the pump body and resuming the stream of pressurised air.
